# EUROPÄISCHE PATENTSCHRIFT

(11) **EP 0 903 355 B1**
(45) Veröffentlichungstag und Bekanntmachung des Hinweises auf die Patenterteilung: **09.04.2003**
(21) Anmeldenummer: 98116839.6
(22) Anmeldetag: 07.09.1998
(51) Int. Cl.: C08F 4/02, C08F 2/34, C08F 36/06

(54) **Zwei-Komponenten-Trägerkatalysatoren und ihre Verwendung für die Gasphasenpolymerisation**
Two component supported catalyst and its use in the gas phase polymerisation
Catalyseur sur support à deux composants et son application à la polymérisation en phase gazeuse

(30) Priorität: 19.09.1997 DE 19741402
(43) Veröffentlichungstag der Anmeldung: 24.03.1999
(73) Patentinhaber: BAYER AG, 51368 Leverkusen (DE)
(72) Erfinder: Windisch, Heike, Dr., 51429 Bergisch Gladbach (DE); Steinhauser, Norbert, Dr., 40789 Monheim (DE)

(56) Entgegenhaltungen:
- EP-A- 0 727 447
- WO-A-95/10542
- DE-A- 2 623 693

## Beschreibung

Die Erfindung betrifft einen Zwei-Komponenten-Trägerkatalysator, dessen Herstellung sowie seine Verwendung zur Polymerisation ungesättigter Verbindungen, insbesondere von konjugierten Dienen, in der Gasphase.

Die Polymerisation von konjugierten Dienen in Lösung hat den Nachteil, daß bei der Abtrennung des nicht umgesetzten Monomeren und des Lösungsmittels vom gebildeten Polymeren niedermolekulare Verbindungen über Abluft und Abwasser in die Umwelt gelangen können und deshalb entsprechend entsorgt werden müssen. Außerdem müssen große Mengen an Lösungsmitteln eingesetzt und mit hohem Energieaufwand abgetrennt werden. Die Lösungsmittel sind in der Regel brennbar und leicht entzündlich und stellen daher ein Gefahrenpotential dar.

In den letzten Jahren hat sich zur Herstellung insbesondere von Polyethylen und Polypropylen das Gasphasenverfahren als besonders vorteilhaft erwiesen und technisch durchgesetzt. Die Vorteile des Gasphasenverfahrens beruhen vor allem darauf, daß keine Lösungsmittel eingesetzt werden und Emissionen und Abwasserbelastungen verringert werden können.

Zur Durchführung des Gasphasenverfahrens wurden Trägerkatalysatoren entwickelt, wobei u.a. Ziegler-Natta-Katalysatoren eingesetzt werden. Die Herstellung der geträgerten Katalysatoren kann in der Weise erfolgen, daß das Trägermaterial mit Lösungen der Metallverbindungen und mit Lösungen der Cokatalysatoren gleichzeitig oder nacheinander getränkt wird, so daß der gesamte Katalysator auf einem Trägermaterial aufgebracht ist. Beispiele dafür sind u.a. Katalysatoren auf Basis der Seltenen Erden (z.B. DE 43 34 045, EP 727 447, WO 96/31543, WO 96/31544). Bei dieser Trägerung ist der Ziegler-Natta-Katalysator in einer katalytisch aktiven Form auf dem Trägermaterial gebunden und ist dadurch sehr empfindlich gegenüber Verunreinigungen. Ein weiterer Nachteil liegt darin, daß der Katalysator bei Lagerung über einen längeren Zeitraum altern kann, was mit einer Änderung der katalytischen Selektivität und der Aktivität einhergeht. Dies wirkt sich nachteilig auf die Produktqualitäten und Raum-Zeit-Ausbeuten aus.

Eine weitere Variante zur Darstellung von Katalysatoren für die Gasphasenpolymerisation besteht darin, daß eine oder mehrere Katalysatorbestandteile während der Polymerisation in gelöster Form in den Reaktionsraum eingesprüht werden, in dem sich z.B. ein Wirbelbett aus inerten Feststoffpartikeln befindet (siehe z.B. WO 96/04323, WO 96/0432, US 5 453 471).

Bei diesen Katalysatoren ist von Nachteil, daß ein Teil des Katalysatorsystems in Lösung in das Gasphasenverfahren eingespritzt wird, wodurch sich Lösungsmittel insbesondere bei der kontinuierlichen Fahrweise im Reaktor anreichern kann. Das Lösungsmittel muß anschließend wieder aus dem Polymerisationsprodukt entfernt werden, was zu Lasten der Wirtschaftlichkeit des Gasphasenverfahrens geht. Darüber hinaus kann es zu Verklebungen des Polymeren durch Anquellen mit dem Lösungsmittel kommen, vor allem bei Dienen, weshalb eine große Menge an Pudermaterial im Reaktionsbett erforderlich ist. Da dabei die Produktqualität vermindert werden kann, sind große Mengen an Pudermaterial möglichst zu vermeiden.

Für die Gasphasenpolymerisation von Polyolefinen ist eine weitere Möglichkeit der Katalysatorpräparation bekannt. Gemäß DE 26 23 693 wird die Übergangsmetallverbindung in fester Form eingesetzt, eine metallorganische Verbindung auf ein geeignetes Trägermaterial aufgebracht und die Gasphasenpolymerisation von Ethylen mit einer Mischung beider Katalysatorkomponenten durchgeführt.

In WO 96/10542 werden Katalysatoren beschrieben, in denen die Übergangsmetallverbindung und die metallorganische Verbindung getrennt auf Trägermaterialien gebunden werden und die Mischung der beiden Komponenten für die Polymerisation von Olefinen eingesetzt wird. In den Patentbeispielen wird für beide Katalysatorkomponenten das gleiche Trägermaterial eingesetzt (Davison 948 silica), und die Polymerisation erfolgt nach Übereinanderschichten der beiden Komponenten. Bei dem Trägermaterial "Davison 948 silica" handelt es sich um sphärische Agglomerate mit einem mittleren Teilchendurchmesser von 30 bis 100 µm, die häufig für Gasphasenpolymerisationen eingesetzt werden.

Die in WO 96/10542 beschriebenen Katalysatoren für die Herstellung von Polyolefinen werden mit Methylalumoxan als Cokatalysator eingesetzt. Bezogen auf die als Übergangsmetallverbindung (ÜM-Verbindungen) eingesetzten Metallocenverbindungen wird der Cokatalysator in einem hohen molaren Überschuß eingesetzt, wobei ein weiterer Überschuß an Cokatalysator keinen nachteiligen Einfluß auf die Aktivität des Katalysators besitzt, so daß der maximale Anteil des Cokatalysators im Katalysatorsystem vor allem aus ökonomischen Gründen begrenzt wird.

Bei Darstellung von Katalysatoren für die Gasphasenpolymerisation von konjungierten Dienen muß dagegen beachtet werden, daß bei den Katalysatoren das molare Verhältnis von ÜM-Verbindung zu speziellen Komponenten der Cokatalysatoren in engen Grenzen einzuhalten ist, wobei dann zu wenig oder zu viel dieser Komponente zur Desaktivierung des Katalysatorsystems führt.

Aufgrund der zur Verklebung neigenden Polymeren ist es notwendig, den Katalysator während der Polymerisation z.B. durch Rühren oder durch einen Gasstrom in Bewegung zu halten, um ein Verkleben der Katalysatorpartikel während der Polymerisation zu verhindern.

Aufgabe der vorliegenden Erfindung ist es nun, die Nachteile der bislang eingesetzten Trägerkatalysatoren für die Polymerisation von Diolefinen in der Gasphase zu vermeiden und Trägerkatalysatoren zur Verfügung zu stellen, die lösungsmittelfrei eingesetzt werden können, besonders lagerstabil und einfach herzustellen sind und bezüglich Aktivität, Selektivität und Reaktionsbedingungen mit den bislang bekannten Trägerkatalysatoren übereinstimmen oder gar diese übertreffen und sich bei der Herstellung von zur Verklebung neigenden Polymeren einsetzen lassen.

Gegenstand der vorliegenden Erfindung ist daher ein Zwei-Komponenten-Trägerkatalysator bestehend aus
a) mindestens einer auf einem anorganischen oder polymeren organischen Trägermaterial aufgebrachten Übergangsmetallverbindung; wobei das Übergangsmetall ausgewählt ist aus der Gruppe der d- und f-Elemente des Periodensystems nach Mendelejew
b) mindestens einer auf einem anorganischen oder polymeren organischen Trägermaterial aufgebrachten metallorganischen Verbindung, wobei das Metall ausgewählt ist aus der Gruppe der IIa, IIb und IIIb-Elemente des Periodensystems [(F.A. Cotton, G. Wilkinson, Anorganische Chemie, 4. Auflage, VCH Verlagsgesellschaft mbH, Weinheim, 1985)] und
c) gegebenenfalls mindestens einem Modifikator, der auf a) und/oder auf b) geträgert ist,
wobei bei der Komponente a) die Übergangsmetallverbindung in Mengen von 0,1 bis 100 mmol, bezogen auf 100 g des Trägermaterials, und bei der Komponente b) die metallorganische Verbindung in Mengen von 0,1 bis 1000 mmol, bezogen auf 100 g des Trägermaterials, und die Komponente c) in Mengen von 0 bis 500 mmol, bezogen auf 100 g des Trägermaterials, eingesetzt wird und die Trägermaterialien der Komponenten a) zu b) in Gewichtsmengenverhältnissen (g/g) von 1:10⁻³ bis 1000 eingesetzt werden und wobei mindestens eine der Komponente a) oder b) ein Trägermaterial mit einer mittleren Partikelgröße vor und/oder während der Polymerisation von <25 µm, bevorzugt <10 µm, besonders bevorzugt <2 µm, aufweist.

Bevorzugt wird bei der Komponente a) die Übergangsmetallverbindung in Mengen von 0,5 bis 50 mmol, bezogen auf 100 g des Trägermaterials, und bei der Komponente b) die metallorganische Verbindung in Mengen von 0,5 bis 500 mmol, bezogen auf 100 g des Trägermaterials, und bei der Komponente c) der Modifikator in Mengen von 0 bis 250 mmol, bezogen auf 100 g des Trägermaterials, eingesetzt.

Das Molverhältnis der auf die Trägermaterialien aufgebrachten Verbindungen der Komponenten a) zu b) zu c) ist vom eingesetzten Katalysatorsystem abhängig. Bevorzugt werden solche Molverhältnisse eingesetzt, wie sie für die Ziegler-Natta-Katalysatorsysteme in der Lösungspolymerisation bekannt sind. Die Molverhältnisse der Komponenten a) : b) : c) betragen 1 : 1 bis 10.000 : 0 bis 1000, bevorzugt 1 : 1 bis 1000 : 0 bis 100.

Für die Komponente a) werden bevorzugt solche Übergangsmetallverbindungen eingesetzt, wie sie bei Ziegler-Natta-Katalysatoren für die Dienpolymerisation verwendet werden. Besonders bevorzugt sind die Elemente der Seltenen Erden, wie Lanthan, Cer, Praseodym, Neodym, Terbium, Dysprosium, Holmium, Erbium, sowie Titan, Zirkonium, Vanadium, Chrom, Kobalt, Eisen und Nickel, insbesondere Lanthan, Cer, Neodym, Kobalt, Nickel, Titan, Vanadin, ganz besonders bevorzugt Lanthan, Neodym und Kobalt.

Als Übergangs-Metallverbindungen kommen insbesondere in Frage solche mit anorganischen Gruppen, wie z.B. Halogenide, Sulfat-, Sulfonat-, Phosphat-, Phosphonat- und Carbonatgruppen, solche mit organischen Gruppen, wie β-Diketonen, Carboxylat-, Alkoholat-, Phenolat- und Amidgruppen, und Organo-Metallverbindungen,. wie z.B. Monocyclopentadienyl, Monoindenyl- und Monofluorenylmetallverbindungen.

Für die Komponente b) werden bevorzugt solche metallorganischen Verbindungen eingesetzt, wie sie als Cokatalysatoren bei den Ziegler-Natta-Katalysatoren eingesetzt werden. Dabei sind bevorzugt Verbindungen der Metalle aus den Gruppe IIa, IIb und IIIb des Periodensystems der Elemente zu nennen, besonders bevorzugt Magnesium, Calcium, Bor, Aluminium, Zink, ganz besonders bevorzugt Aluminium und Magnesium.

Weiterhin können als metallorganische Verbindungen der Komponente b) die in der Literatur bekannten Alumoxane eingesetzt werden, insbesondere werden erwähnt Methylalumoxan und iso-Butylalumoxan.

Als Modifikatoren (Komponente c) können die für Ziegler-Natta-Katalysatoren bekannten Verbindungen eingesetzt werden, wie z.B. organische Halogenverbindungen, halogenierte Silane, geeignete Lewis-Säuren, geeignete Lewis-Basen und einfach oder mehrfach ungesättigte organische Verbindungen.

Als Trägermaterialien für die Komponenten a) und b) des erfindungsgemäßen Katalysators werden teilchenförmige, anorganische Feststoffe oder auch teilchenförmige, polymere organische Feststoffe mit einer spezifischen Oberfläche >10, bevorzugt 10 bis 1.000 m²/g (BET) und einem Porenvolumen von 0 bis 15, bevorzugt von 0,3 bis 5 ml/g, eingesetzt, die sich während der Polymerisationsreaktion inert verhalten. Die mittlere Teilchengröße der Trägermaterialien beträgt 0,1 µm bis 5 mm, bevorzugt 0,5 µm bis 2 mm, wobei mindestens ein Trägermaterial mittlere Teilchengrößen von <25 µm, bevorzugt <10 µm und besonders bevorzugt <2 µm besitzt, wobei diese mittlere Teilchengröße vor der Polymerisation vorhanden ist oder während der Polymerisation durch Zerfall der Trägerpaktikel, bevorzugt durch Desagglomerisation des Trägerpartikels, gebildet wird.

Bei den erfindungsgemäßen Katalysatoren können die Trägermaterialien der Komponente a) und der Komponente b) gleich oder verschieden sein.

Besonders bevorzugt werden bei den Komponenten a) und b) Trägermaterialien verwendet, bei denen die Übergangs-Metallverbindungen der Komponente a) auf einem Trägermaterial mit großvolumigen Poren aufgebracht und die Metallverbindungen der Komponente b) auf einem feinteiligeren Trägermaterial aufgebracht sind, wobei der Porenradius des Trägermaterials der Komponente a) größer als der Teilchendurchmesser des Trägermaterials der Komponente b) ist und sich somit das feinteilige Trägermaterial in den Poren des großvolumigen Trägermaterials einlagern kann.

Die spezifische Oberfläche (BET) des Trägermaterials wird in üblicher Weise bestimmt [siehe z.B. S. Brunauer, P.H. Emmet und Teller, J. Amer. Chem. Soc. 60(2) (1938) 309], das Porenvolumen wird bestimmt durch die Zentrifugationsmethode [(M. McDaniel, J. Colloid Interface Sci. 78 (1980) 31]. Die angegebene Teilchengröße stellt das zahlenmäßige Mittel der Trägerpartikel dar und wird als mittlere Teilchengröße bezeichnet. Die mittlere Teilchengröße wird in üblicher Weise bestimmt, z.B. mit Hilfe eines Mastersizers (Bereich von 1 bis 600 µm) oder mit Hilfe von elektronenmikroskopischen Aufnahmen.

Als anorganische Feststoffe eignen sich für das Trägermaterial insbesondere Kieselgele, Fällungskieselsäuren, Aerosile, Tone, Alumosilikate, Talkum, Zeolithe, Ruß, Graphit, Aktivkohle, anorganische Oxide, wie z.B. Aluminiumoxid, Magnesiumoxid und Titandioxid, Siliciumcarbid, anorganische Salze, wie z.B. Bariumsulfat, Magnesiumsulfat, Magnesiumchlorid, Calciumcarbonat, ganz besonders bevorzugt Fällungskieselsäuren, Ruß und Aktivkohle. Weiterhin sind organische Trägermaterialien geeignet, wie z.B. Polyethylen, Polypropylen, Polystyrol oder Polybutadiene.

Die genannten anorganischen Feststoffe, die der obengenannten Spezifikation genügen und deshalb für den Einsatz geeignet sind, werden beispielsweise näher beschrieben in Ullmanns, Encyclopädie der technischen Chemie, Band 21, S. 439 ff. (Silikagele), Band 23, S. 311 ff. (Tone), Band 14, S. 633 ff. (Ruße), Band 24, S. 575 ff und Band 17, S. 9 ff. (Zeolithe).

Die Übergangsmetallverbindungen für die Komponente a) sind in der Literatur ausführlich beschrieben und dem Fachmann bekannt (siehe z.B. L. Porri, A. Giarrusso in Comprehensive Polymer Science, G.C. Eastmond, A. Ledwith, S. Russo, P. Sigwalt, Eds., Vol. 4, Part II, Pergamon Press Ltd., Oxford, 1989, pp. 53).

Von den Verbindungen der Seltenen Erden können ebenfalls die in EP 727 447 aufgeführten Verbindungen und die in WO 96/31544 genannten Allyl-Verbindungen der Seltenen Erden eingesetzt werden.

Es seien daher nur einige repräsentative Übergangs-Metallverbindungen erwähnt, die ganz besonders bevorzugt eingesetzt werden:

Neodymchlorid, Neodymbromid, Neodymiodid, Neodympivalat, Neodymversatat, Tris(allyl)neodym, Di(allyl)neodymchlorid, Allylneodymdichlorid, Cyclopentadienyldi(allyl)neodym, Pentamethylcyclopentadienyldi(allyl)neodym, Cobalt(II)octanoat, Cobalt(II)chlorid, Cobalt(II)bromid, Cobalt(II)acetylacetonat, Cobalt(III)acetylacetonat, Cobalt(II)bromid-bis(triphenylhosphin), Cobalt(II)bromidbis(pyridin), Cyclopentadienyltitantricblorid, Pentamethylcyclopentadienyltitantrichlorid, Titandiodid-dichlorid, Titantetrachlorid, Titantriiodid-ethoxid, Vanadin(III)acetylacetonat, Cyclopentadienylvanadiumtrichlorid, Methylcyclopentadienvanadindiclalorid, Pentamethylcyclophentadienvanadindichlorid, Methylcyclopentadienylvanadiumdichlorid-bis(triethylphosphan), Nickel(II)octanoat, Nickel(II)acetylacetonat, Nickel(II)chlorid, Nickel(II)bromid.

Die Übergangs-Metallverbindungen können sowohl einzeln als auch im Gemisch untereinander eingesetzt werden. Das jeweils günstigste Mischungsverhältnis kann durch entsprechende Vorversuche leicht bestimmt werden.

Die für die Komponente b) zu verwendenden metallorganischen Verbindungen sind beispielsweise ausführlich beschrieben in G. Wilkinson, F.G.A. Stone, E.W. Abel, Comprehensive Organometallic Chemistry, Pergamon Press Ltd., New York, 1982, Vol. 1 und Vol. 3 sowie in E.W. Abel, F.G. Stone, G. Wilkinson Comprehensive Organometallic Chemistry, Pergamon Press Ltd., Oxford, 1995, Vol. 1 und 2.

Als metallorganische Verbindungen der Komponente b), die wiederum einzeln oder im Gemisch untereinander eingesetzt werden können, werden besonders bevorzugt genannt: Dibutylmagnesium, Butylethylmagnesium, Butyloctylmagnesium, Trimethylaluminium, Triethylaluminium, Tri-n-propylaluminium, Tri-iso-propylaluminium, Tri-n-butylaluminium, Tri-iso-butylaluminium, Tripentylaluminium, Trihexylaluminium, Tricyclohexylaluminium, Triocrylaluminium, Triethylaluminiumhydrid, Di-n-butylaluminiumhydrid und Di-iso-butylaluminiumhydrid, Ethylaluminiumdichlorid, Diethylaluminiumchlorid, Ethylaluminiumsesquichlorid, Ethylaluminiumdibromid, Diethylaluminiumbromid, Ethylaluminiumdiiodid, Diethylaluminiumiodid, Di-iso-butylaluminiumchlorid, Octylaluminiumdichlorid, Dioctylaluminiumchlorid.

Ein weiterer Gegenstand der vorliegenden Erfindung ist ein Verfahren zur Herstellung des zuvor beschriebenen Zwei-Komponenten-Trägerkatalysators, das dadurch gekennzeichnet ist, daß man zur Herstellung der Komponente a) mindestens eine Übergangsmetallverbindung, gegebenenfalls in Gegenwart der Komponente c), in einem inerten Lösungs- und/oder Verdünnungsmittel bei Temperaturen von -80 bis 150°C löst oder dispergiert, das Trägermaterial mit dieser Lösung oder Dispersion imprägniert und dann das inerte Lösungs- und/oder Verdünnungsmittel bei Temperaturen von -40 bis 150°C, gegebenenfalls unter vermindertem Druck, entfernt, und daß man zur Herstellung der Komponente b) mindestens eine metallorganische Verbindung, gegebenenfalls in Gegenwart der Komponente c), in einem inerten Lösungs- und/oder Verdünnungsmittel bei Temperaturen von -80 bis 150°C löst oder dispergiert, das Trägermaterial mit dieser Lösung oder Dispersion behandelt und dann das inerte Lösungs- und/oder Verdünnungsmittel bei Temperaturen von -40 bis 150°C, gegebenenfalls unter vermindertem Druck, entfernt.

Bei der Komponente a) wird die einzusetzende Übergangsmetallverbindung, gegebenenfalls in Gegenwart der Komponente c), bevorzugt bei Temperaturen von -50 bis 120°C, insbesondere bei -20 bis 100°C in einem geeigneten Lösungs- und/oder Verdünnungsmittel gelöst oder dispergiert und das eingesetzte inerte Lösungs- und/oder Verdünnungsmittel bevorzugt bei Temperaturen von -20 bis 140°C, besonders bevorzugt bei Temperaturen von 0 bis 120°C, gegebenenfalls unter vermindertem Druck, nach der Imprägnierung entfernt.

Als Lösungs- und/oder Verdünnungsmittel kommen insbesondere in Frage: aliphatische, cycloaliphatische und/oder aromatische Lösungsmittel, wie Butan, Pentan, n-Hexan, c-Hexan, Benzol, Toluol, Xylol, halogenierte Kohlenwasserstoffe, wie Methylenchlorid und/oder Chlorbenzol, Ether, wie Tetrahydrofuran, Diethylether, Dimethoxyethan und/oder Dioxan, Thioether, wie Tetrahydrothiophen, tertiäre Amine, wie Trimethylamin, Triethylamin und/oder Dimethylanilin, Wasser oder Alkohole, wie Methanol, Ethanol und/oder iso-Propanol und/oder Ketone, wie Aceton, Methylethylketon und/oder Diethylketon. Die Lösungsmittel und/oder Verdünnungsmittel können einzeln oder im Gemisch untereinander eingesetzt werden.

Bei der Katalysatorkomponente b) wird die metallorganische Verbindung, gegebenenfalls in Gegenwart einer Komponente c), bevorzugt bei Temperaturen von -50 bis 120°C, insbesondere bei -20 bis 100°C, in einem geeigneten Lösungsmittel gelöst und das Lösungsmittel nach der Imprägnierung, gegebenenfalls unter vermindertem Druck, entfernt.

Als Lösungsmittel eignen sich insbesondere aliphatische, cycloaliphatische und/oder. aromatische Lösungsmittel, wie Butan, Pentan, n-Hexan, c-Hexan, Benzol, Toluol, Xylol, die einzeln oder im Gemisch untereinander eingesetzt werden können.

Die Herstellung der Katalysatorkomponente b) kann im Prinzip auf die gleiche Art und Weise erfolgen wie die Herstellung der Katalysatorkomponente a).

Die Menge des eingesetzten inerten Lösungs- und/oder Verdünnungsmittels kann bei Komponente a) und b) in weiten Grenzen variiert werden. Aus ökonomischen Gründen wird man die Menge möglichst gering halten. Die minimale Menge richtet sich nach der Menge und der Löslichkeit der einzelnen Verbindungen sowie dem Porenvolumen des Trägermaterials. Bevorzugt wird eine Menge von 10 bis 2 000 Teilen des Lösungs- und/oder Verdünnungsmittels, bezogen auf 100 Teile des Trägermaterials, eingesetzt.

Ein weiterer Gegenstand der Erfindung ist die Verwendung der erfindungsgemäßen Zwei-Komponenten-Trägerkatalysatoren für die Polymerisation von ungesättigten Verbindungen, insbesondere fiir die Polymerisation von konjugierten Dienen, vorzugsweise von 1,3-Butadien, Isopren, 1,3-Pentadien, 2-Methyl-1,3-pentadien, 4-Methyl-1,3-pentadien und/oder 2,4-Hexadien, in der Gasphase.

Dabei werden die Katalysatorkomponenten a) und b) in bevorzugter Weise unmittelbar vor der Polymerisationsreaktion abgemischt und die frisch hergestellte Katalysatormischung in den Polymerisationsraum eingebracht.

Es ist jedoch auch möglich, die Katalysatorkomponenten getrennt in den Polymerisationsraum zuzugeben.

Die Gasphasenpolymerisation erfolgt dabei, indem man die zu polymerisierenden Monomere mit dem beschriebenen Katalysator in Berührung bringt. Dabei können den gasförmig vorliegenden Monomeren noch weitere Gase zugemischt werden, die entweder der Verdünnung oder der Wärmeabführung oder der Regelung des Molekulargewichts dienen. Als solche Gase sind z.B. zu nennen: Stickstoff, Argon, Wasserstoff, Kohlenwasserstoffe, wie z.B. Methan, Ethan, Propan, Butan sowie 1,2-Butadien. Weiterhin können gegebenenfalls ein oder mehrere 1-Olefine zugesetzt werden, die unter den Bedingungen der Polymerisation gasförmig vorliegen, wie z.B. Ethylen, Propen, 1-Buten, 1-Hexen, 1-Octen, Styrol, Methylstyrol.

Die Polymerisation wird üblicherweise bei Drücken von 1 mbar bis 50 bar, bevorzugt bei 1 bis 20 bar, durchgeführt. Die Temperaturen betragen im allgemeinen -20 bis 250°C, bevorzugt 0 bis 200°C, besonders bevorzugt 20 bis 160°C.

Selbstverständlich können die erfindungsgemäßen Katalysatoren auch für die Polymerisation von ungesättigten Verbindungen im Lösungs- oder Suspensionsverfahren eingesetzt werden.

In einer gängigen Ausführungsform wird die Gasphasenpolymerisation wie folgt durchgeführt: Der erfindungsgemäße Katalysator wird in eine Apparatur überführt, die geeignet ist, den pulverförmigen Katalysator in Bewegung zu halten. Das kann z.B. durch Rühren, Drehen, Schütteln und/oder einen Gasstrom erfolgen. Das zunächst im Gasraum befindliche inerte Gas, z.B. Argon, wird dann durch das gasförmige Monomere ersetzt. Dabei setzt die Polymerisation ein und die Temperatur steigt an. Das Monomere wird, gegebenenfalls verdünnt mit einem Inertgas, so schnell dem Reaktor zugeführt, daß die gewünschte Reaktionstemperatur nicht überschritten wird. Die Reaktionstemperatur kann auch auf übliche Weise durch Heizen oder Kühlen eingestellt werden. Die Polymerisation wird durch Abstellen der Monomerzufuhr oder durch Zugabe von Deaktivatoren, wie z.B. Aceton, Methanol, Wasser, Sauerstoff, Kohlendioxid, beendet. Das Polymere kann in der bekannten Weise weiterbehandelt werden, indem man den Katalysator desaktiviert und das Polymere mit z.B. bekannten Alterungsschutzmitteln, wie z.B. sterisch gehinderten Phenolen und/oder aromatischen Aminen, in üblichen Mengen behandelt.

### Beispiele

### Beispiel 1:

### 1a) Präparation der Teilkomponente A

23,0 g des Trägers Accurel EP 100 (mikroporöses PP von Akzo Nobel, Teilchengrößenverteilung 400 - 1000 µm) wurden in einem 500 ml-Zweihalskolben für 2 h im Vakuum auf 80°C erhitzt. Anschließend wurde auf Raumtemperatur abgekühlt und der Kolben mit Argon beaufschlagt. Unter Inertbedingungen wurde das Trägermaterial mit einer Lösung von 1,15 mmol Neodymversatat in 155 ml Hexan versetzt. Nach Abdestillieren des Lösungsmittels bei 50°C im Vakuum wurden 23,8 g eines frei fließenden Pulvers erhalten.

### 1b) Präparation der Teilkomponente B

8,64 g der Fällungskieselsäure Vulkasil S (getrocknet bei 800°C, mittlere Teilchengröße 18 µm) wurden in einem 250 ml-Zweihalskolben unter Inertbedingungen mit 43 ml einer Lösung von 17,3 mmol DIBAH und 0,4 mmol EASC in Hexan versetzt und das Lösungsmittel anschließend bei 50°C im Vakuum destillativ entfernt. Es wurden 11,2 g eines frei fließenden Pulvers erhalten.

### 1c) Polymerisation

In einen 250 ml-Glaskolben, der mit einem KPG-Rührer, einem Heißluftfön zum Wärmen und Kühlen sowie Anschlüssen für Vakuum, Argon- und Butadienzufuhr versehen war, wurden unter Inertbedingungen 2,0 g der unter 1a) beschriebenen Teilkomponente A und 2,04 g der unter 1b) beschriebenen Teilkomponente B eingebracht. Es wurde evakuiert und der Kolben anschließend unter Rühren bis zu einem Druck von 1150 mbar mit Butadien beaufschlagt. Über einen Zeitraum von 3 h wurde bei einer Innentemperatur von 60°C der Butadiendruck zwischen 1150 und 1000 mbar gehalten. Die Polymerisation wurde abgebrochen, indem das Butadien entfernt und der Kolben mit Luftsauerstoff befüllt wurde. Es wurden 76,0 g Produkt erhalten.

### Vergleichbeispiel 2:

### 2a) Präparation der Teilkomponente A

Es wurde die unter 1a) beschriebene Teilkomponente verwendet.

### 2b) Präparation der Teilkomponente B

10,48 g des Kieselgels Sylopol 3325 N (Hersteller Grace, getrocknet bei 800°C, mittlere Teilchengröße 78 µm) wurden in einem 250 ml-Zweihalskolben unter Inertbedingungen mit 42 ml einer Lösung von 21,0 mmol DIBAH und 0,5 mmol EASC in Hexan versetzt und das Lösungsmittel anschließend bei 50°C im Vakuum destillativ entfernt. Es wurden 13,2 g eines frei fließenden Pulvers erhalten.

### 2c) Polymerisation

In einen 250 ml-Glaskolben, der mit einem KPG-Rührer, einem Heißluftfön zum Wärmen und Kühlen sowie Anschlüssen für Vakuum, Argon- und Butadienzufuhr versehen war, wurden unter Inertbedingungen 1,39 g der unter 2a) beschriebenen Teilkomponente A und 1,41 g der unter 2b) beschriebenen Teilkomponente B eingebracht. Es wurde evakuiert und der Kolben anschließend unter Rühren bis zu einem Druck von 1150 mbar mit Butadien beaufschlagt. Über einen Zeitraum von 2 h wurde bei einer Innentemperatur von 60°C der Butadiendruck zwischen 1150 und 1000 mbar gehalten. Die Polymerisation wurde abgebrochen, indem das Butadien entfernt und der Kolben mit Luftsauerstoff befüllt wurde. Es wurden 9,3 g Produkt erhalten.

### Beispiel 3:

### 3a) Präparation der Teilkomponente A

9,79 g des Furnace-Rußes N 660 (Hersteller Degussa, mittlere Teilchengröße 1 mm) wurden in einem 250 ml-Zweihalskolben für 2 h im Vakuum auf 120°C erhitzt. Anschließend wurde auf Raumtemperatur abgekühlt und der Kolben mit Argon beaufschlagt. Unter Inertbedingungen wurde das Trägermaterial mit 19,5 ml einer Lösung von 0,49 mmol Neodymversatat in Hexan versetzt. Nach Abdestillieren des Lösungsmittels bei 50°C im Vakuum wurden 10,2 g eines frei fließenden Pulvers erhalten.

### 3b) Präparation der Teilkomponente B

Es wurde die unter 1b) beschriebene Teilkomponente verwendet.

### 3c) Polymerisation

In einen 250 ml-Glaskolben, der mit einem KPG-Rührer, einem Heißluftfön zum Warmen und Kühlen sowie Anschlüssen für Vakuum, Argon- und Butadienzufuhr versehen war, wurden unter Inertbedingungen 1,17 g der unter 3a) beschriebenen Teilkomponente A und 1,24 g der unter 3b) beschriebenen Teilkomponente B eingebracht. Es wurde evakuiert und der Kolben anschließend unter Rühren bis zu einem Druck von 1150 mbar mit Butadien beaufschlagt. Über einen Zeitraum von 80 min wurde bei einer Innentemperatur von 60°C der Butadiendruck zwischen 1150 und 1000 mbar gehalten. Die Polymerisation wurde abgebrochen, indem das Butadien entfernt und der Kolben mit Luftsauerstoff befüllt wurde. Es wurden 17,9 g Produkt erhalten.

### Beispiel 4-6:

### a) Präparation der Teilkomponente A

10,2 g des Trägers Accurel EP 100 (mikroporöses PP von Akzo Nobel, Teilchengräßenverteilung 400 - 1000 µm) wurden in einem 500 ml-Zweihalskolben für 2 h im Vakuum auf 80°C erhitzt. Anschließend wurde auf Raumtemperatur abgekühlt und der Kolben mit Argon beaufschlagt. Unter Inertbedingungen wurde das Trägermaterial mit einer Lösung von 0,51 mmol Cobalt-II-octanoat in 80 ml Toluol versetzt. Nach Abdestillieren des Lösungsmittels bei 25°C im Vakuum wurden 11,0 g eines frei fließenden Pulvers erhalten.

### b) Präparation der Teilkomponente B

9,8 g der Fällungskieselsäure Vulkasil S (getrocknet bei 800°C, mittlere Teilchengröße 18 µm) wurden in einem 250 ml-Zweihalskolben unter Inertbedingungen mit 30 ml einer Lösung von 9,8 mmol Wasser in Toluol versetzt, die Suspension auf -40°C gekühlt und dann innerhalb von 30 min mit 42,6 ml einer Lösung von 49 mmol DEAC in Hexan versetzt. Die Suspension wurde unter Rühren innerhalb von einer Stunde auf 25°C erwärmt und das Lösungsmittel anschließend bei 25°C im Vakuum destillativ entfernt. Es wurden 16,2 g eines frei fließenden Pulvers erhalten.

### c) Polymerisation

In einen 250 ml-Glaskolben, der mit einem KPG-Rührer, einem Heißluftfön zum Wärmen und Kühlen sowie Anschlüssen für Vakuum, Argon- und Butadienzufuhr versehen war, wurden unter Inertbedingungen die in Tabelle 1 angegebenen Mengen der unter 4a) beschriebenen Teilkomponente A und der unter 1b) beschriebenen Teilkomponente B eingebracht. Es wurde evakuiert und der Kolben anschließend unter Rühren bis zu einem Druck von 300 mbar mit Butadien beaufschlagt. Über einen Zeitraum von 30 min wurde der Butadiendruck erst zwischen 250 und 300 mbar, dann weitere 30 min zwischen 400 und 450 mbar und die folgende Polymerisationszeit zwischen 900 und 950 mbar gehalten. Die Innentemperatur wurde während der gesamten Polymerisationszeit in den angegebenen Grenzen gehalten. Die Polymerisation wurde abgebrochen, indem das Butadien entfernt und der Kolben mit Luftsauerstoff befüllt wurde. Die erhaltenen Mengen an Polymer sind in Tabelle 1 angegeben.

**Tabelle 1:**

| Durchführung und Ergebnisse der Gasphasenpolymerisationen von 1,3-Butadien mit den Katalysatorkomponenten A (Beispiel 4-6 a) und B (Beispiel 4-6 b) | | | | | |
|---|---|---|---|---|---|
| Beispiel | Komponente A | Komponente B | Temperatur | Polymerisationszeit | Polymer |
| 4 | 4,1 g | 8,3 g | 35 bis 40 °C | 5,5 h | 56,6 g |
| 5 | 2,9 g | 2,9 g | 30 bis 35 °C | 6,75 h | 52,5 g |
| 6 | 1,4 g | 3,4 g | 25 bis 40 °C | 1,5 h | 12,3 g |

## Patentansprüche

1. Zwei-Komponenten-Trägerkatalysator bestehend aus
a) mindestens einer auf einem anorganischen oder polymeren organischen Trägermaterial aufgebrachten Übergangsmetallverbindung, wobei das Metall ausgewählt ist aus der Gruppe der d- und f-Elemente des Periodensystems nach Mendelejew,
b) mindestens einer auf einem anorganischen oder polymeren organischen Trägermaterial aufgebrachten metallorganischen Verbindung, wobei das Metall ausgewählt ist aus der Gruppe der IIa-, IIb- und IIIb-Elemente des Periodensystems (F.A. Cotton, G. Wilkinson, Anorganische Chemie, 4. Auflage, VCH Verlagsgesellschaft mbH, Weinheim, 1985) und
c) gegebenenfalls mindestens einem Modifikator, der auf a) und/oder auf b) geträgert ist,
wobei bei der Komponente a) die Übergangsmetallverbindung in Mengen von 0,1 bis 100 mmol, bezogen auf 100 g des Trägermaterials, und bei der Komponente b) die metallorganische Verbindung in Mengen von 0,1 bis 100 mmol, bezogen auf 100g des Trägermaterials, und die Komponente c) in Mengen von 0,01 bis 500 mmol, bezogen auf 100 g des Trägermaterials, eingesetzt wird und die Trägermaterialien der Komponenten a) zu b) in Gewichtsmengenverhältnissen (g/g) von 1:10⁻³ bis 1000 eingesetzt werden und wobei mindestens eine der Komponenten a) oder b) ein Trägermaterial mit einer mittleren Partikelgröße von <25 µm vor oder während der Polymerisation aufweist.

2. Verfahren zur Herstellung des Zwei-Komponenten-Trägerkatalysators nach Anspruch 1, **dadurch gekennzeichnet, daß** man zur Herstellung der Komponente a) mindestens eine Übergangsmetallverbindung und gegebenenfalls mindestens eine Komponente c) in einem inerten Lösungs- und/oder Verdünnungsmittel bei Temperaturen von -80 bis 150°C löst oder dispergiert, das Trägermaterial mit dieser Lösung oder Dispersion imprägniert und dann das inerte Lösungs- und/oder Verdünnungsmittel bei Temperaturen von -40 bis 150°C, gegebenenfalls unter vermindertem Druck, entfernt, und daß man zur Herstellung der Komponente b) mindestens eine metallorganische Verbindung und gegebenenfalls mindestens eine Komponente c) in einem inerten Lösungs- und/oder Verdünnungsmittel bei Temperaturen von -80 bis 150°C löst oder dispergiert, das Trägermaterial mit dieser Lösung oder Dispersion behandelt und dann das inerte Lösungs- und/oder Verdünnungsmittel bei Temperaturen von -40 bis 150°C, gegebenenfalls unter vermindertem Druck, entfernt.

3. Verwendung der Katalysatoren nach Anspruch 1 zur Polymerisation von ungesättigten organischen Verbindungen in der Gasphase.

## Claims

1. Two-component supported catalyst consisting of
a) at least one transition metal compound applied on to an inorganic or polymeric organic supporting material, the metal being selected from the group of the d and f elements of the periodic table according to Mendeleev,
b) at least one organometallic compound applied on to an inorganic or polymeric organic supporting material, the metal being selected from the group of the IIa, IIb and IIIb elements of the periodic table (F.A. Cotton, G. Wilkinson, Anorganische Chemie, 4th edition, VCH Verlagsgesellschaft mbH, Weinheim, 1985) and
c) optionally at least one modifier which is supported on a) and/or on b),
the transition metal compound in component a) being used in quantities of 0.1 to 100 mmol, based on 100 g of the supporting material, and the organometallic compound in component b) being used in quantities of 0.1 to 100 mmol, based on 100 g of the supporting material, and component c) being used in quantities of 0.01 to 500 mmol, based on 100 g of the supporting material, and the supporting materials of components a) to b) being used in quantitative ratios by weight (g/g) of 1:10⁻³ to 1000, and at least one of components a) or b) having a supporting material with an average particle size before or during polymerisation of <25 µm.

2. Process for the preparation of the two-component supported catalyst according to claim 1, **characterised in that**, to prepare component a), at least one transition metal compound and optionally at least one component c) is dissolved or dispersed in an inert solvent and/or diluent, at temperatures of -80 to 150°C, the supporting material is impregnated with this solution or dispersion and then the inert solvent and/or diluent is removed at temperatures of -40 to 150°C, optionally under reduced pressure, and that, to prepare component b), at least one organometallic compound and optionally at least one component c) is dissolved or dispersed in an inert solvent and/or diluent, at temperatures of -80 to 150°C, the supporting material is treated with this solution or dispersion and the inert solvent and/or diluent is then removed at temperatures of -40 to 150°C, optionally under reduced pressure.

3. Use of the catalysts according to claim 1 for the polymerisation of unsaturated organic compounds in the gas phase.

## Revendications

1. Catalyseur sur support à deux composants consistant en
b) au moins un dérivé de métal de transition appliqué sur une matière de support minérale ou organique polymère, le métal étant choisi dans le groupe des éléments d et f de la Classification Périodique selon Mendeleieff,
b) au moins un dérivé organométallique appliqué sur une matière de support minérale ou organique polymère, le métal étant choisi dans les groupes des éléments IIa, IIb et IIIb de la Classification Périodique (F.A. Cotton, G. Wilkinson, Anorganische Chemie, 4^{ème} édition, VCH Verlagsgeselischaft mbH, Weinheim, 1985) et
c) le cas échéant au moins un agent modifiant qui est appliqué sur a) et/ou b),
le composant a), le dérivé de métal de transition, étant mis en oeuvre en quantité de 0,1 à 100 mmol, pour 100 g de la matière de support et le composant b), le dérivé organométallique, en quantité de 0,1 à 100 mmol, pour 100 g de la matière de support, et le composant c) en quantité de 0,01 à 500 mmol pour 100 g de la matière de support, et les matières de support des composants a) et b) étant mises en oeuvre à des proportions relatives en poids (g/g) de 1:10⁻³ à 1000, l'un au moins des composants a) ou b) ayant une matière de support à une dimension de particule moyenne inférieure à 25 µm avant ou durant la polymérisation.

2. Procédé pour la préparation du catalyseur sur support à deux composants selon la revendication 1, **caractérisé en ce que**, pour la préparation du composant a), on dissout ou on disperse au moins un dérivé de métal de transition et le cas échéant au moins un composant c) dans un solvant et/ou diluant inerte à des températures de -80 à +150°C, on imprègne la matière de support par cette solution ou dispersion puis on élimine le solvant et/ou diluant inerte à des températures allant de -40 à 150°C, le cas échéant sous vide, et pour la préparation du composant b), on dissout ou on disperse au moins un dérivé organométallique et le cas échéant au moins un composant c) dans un solvant et/ou diluant inerte à des températures allant de -80 à +150°C, on traite la matière de support par cette solution ou dispersion puis on élimine le solvant et/ou diluant inerte à des températures allant de -40 à +150°C, le cas échéant sous vide.

3. Utilisation des catalyseurs selon la revendication 1 pour la polymérisation en phase gazeuse de dérivés organiques insaturés.
